# EUROPEAN PATENT APPLICATION

(11) **EP 3 135 563 A1**
(43) Date of publication of application: **01.03.2017**
(21) Application number: 16184016.0
(22) Date of filing: 12.08.2016
(51) Int. Cl.: B62D 7/16, B62D 7/18, B62D 7/22

(54) **DOUBLE DRAGLINK CONFIGURATION FOR VEHICLES**

(30) Priority: 13.08.2015 TR 201510064
(71) Applicant: Anadolu Isuzu Otomotiv sanayi ve Ticaret Anonim Sirketi, 41435 Kocaeli (TR)
(72) Inventor: GÖNEN, Enis, KOCAELI (TR)
(74) Representative: Dereligil, Ersin

(57) **Abstract**

The invention is a double draglink configuration (A) connected to pitman arm (20) which is connected to steering box (10) and increasing stability of the vehicle during braking, acceleration, and passing over bumps. It is characterized in that; it comprises: a first draglink (30) connected to said pitman arm (20), a second draglink (50) connected to said first draglink (30) by means of joint points (41), and an intermediate pitman arm (40) connected between said first draglink (30) and second draglink (50) by means of said joint points (41).

## Description

### The Related Art

The invention relates to a double draglink configuration used in steering systems of commercial vehicles equipped with leaf spring front suspension systems having high front overhang dimensions to increase vehicle stability during braking, acceleration, and passing over bumps.

### The Prior Art

Draglinks are used in the steering systems of commercial vehicles equipped with leaf spring front suspension system having high front overhang dimensions. In the prior art, a sector shaft connected to the steering box and a pitman arm embedded together with this sector shaft are found. The draglink is mounted with the lower end point of the pitman arm. The ideal center is the center of the arc drawn by the joint center at which the draglink is connected to the axle, according to the suspension movement of the leaf spring between jounce and rebound.

During design of the steering systems of vehicles equipped with leaf spring suspension system, the geometry of the arc drawn by the joint center at which the steering arm is connected to the axle, according to the suspension movement of the leaf spring between jounce and rebound, is determined. The draglink joint connected to the pitman arm is required to be at the center of this arc (the ideal center). This is because, the pitman arm is not wanted to be affected from suspension movements on the other hand, steering wheel mechanism is wanted to remain stable. Otherwise, in the steering system that is affected from the suspension movements, there will be bumpsteer and reboundsteer errors, which impacts stability in terms of vehicle dynamics.

Buses have large front overhang dimensions due to their structure (such as the position of the front door etc.). Steering boxes are positioned at the front of vehicles as extensions to steering columns. At this position, it is not possible to center the draglink joint of the pitman arm connected to the steering box to the arc drawn by the suspension movement. This affects the stability negatively by increasing "bumpsteer/reboundsteer errors". These errors also causes the steering wheel to rotate spontaneously according to the laden or unladen situation of the vehicle. As the vehicle is loaded more, the steering wheel will remain with a higher angle compared to the previous situation.

### Description of the Invention

The purpose of the invention is to have technical characteristics that bring an initiative to the related technical field compared to the draglink configuration used in the prior art.

A purpose of the invention is to increase vehicle stability during braking, acceleration, and passing over bumps, with the novel draglink configuration.

Another purpose of the invention is to reduce the bumpsteer / reboundsteer errors via steering geometry, to the levels that would not affect the stability of the vehicle.

Another purpose of the invention is to prevent the steering wheel being affected from laden and unladen situations of the vehicle.

Another purpose of the invention is to locate the steering box to the simplest and optimum position with regard to steering column-chassis relation.

An important purpose of the invention is to prevent steering errors by means of positioning the joint connected to the intermediate pitman arm at the ideal center.

In order to achieve the purposes mentioned above, the invention is a pitman arm connected to a steering box, and a double draglink configuration (A) connected to said pitman arm, comprising:
- a first draglink connected to said pitman arm,
- a second draglink connected to said first draglink by means of joint points, and
- an intermediate pitman arm connected between said first draglink and second draglink by means of said joint points.

### Figures for Better Understanding of the Invention

Figure 1; is a representative assembly perspective view of the present invention applied on a bus or truck with leaf spring front suspension system.
Figure 2; is the close-up assembly view of the double draglink configuration according to the invention.
Figure 3; is the close-up assembly view of the draglink configuration used in the prior art.

### Reference Numbers

- 10.: Steering box
- 20.: Pitman arm
- 30.: First Draglink
- 40.: Intermediate pitman arm
- 41.: Joint points
- 42.: Bearing axis
- 43.: Mounting component
- 50.: Second Draglink
- 60.: Leaf spring 70. Front axle
- 80.: Ideal center
- 90.: Vehicle chassis
- 91.: Mounting surface
- A:: Double Draglink Configuration
- Y:: Horizontal axis
- D:: Vertical axis

### Detailed Description

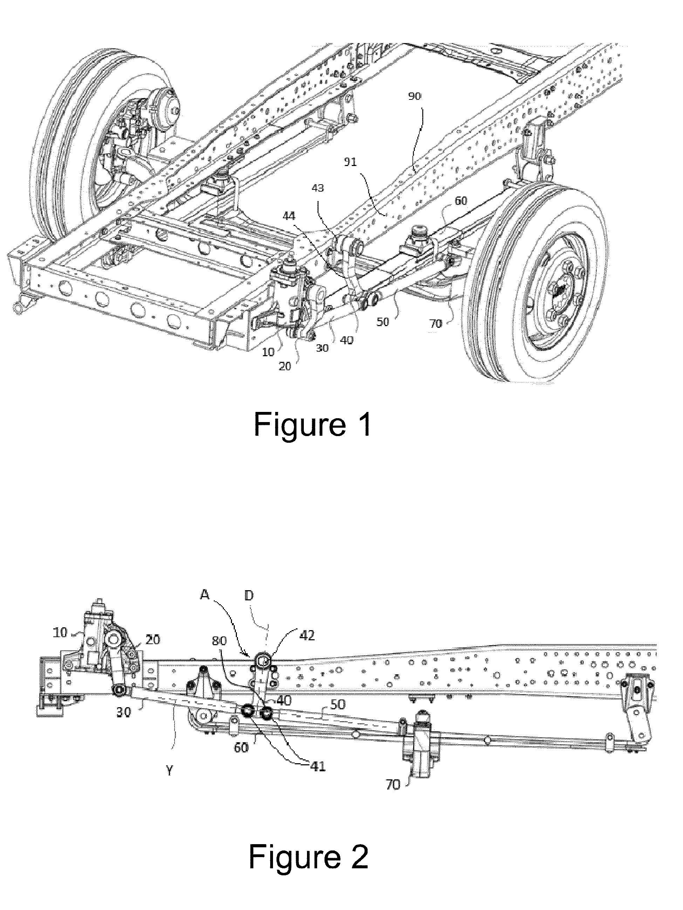

In Figure 2, a pitman arm (20) connected to a steering box (10) and a double draglink configuration (A) connected to said pitman arm (20), increasing stability of the vehicle during braking, acceleration, and passing over bumps are shown in mounted state on a vehicle.

Figure 1 shows a first draglink (30) connected to said pitman arm (20) in the double draglink configuration (A), and a second draglink (50) connected to said first draglink (30) by means of joint points (41). On the other hand, an intermediate pitman arm (40) positioned between said first draglink (30) and second draglink (50), and connected such that it would make rotating motion by means of said joint points (41) is also shown. It comprises an intermediate pitman arm (40) having an angular extension (44) fixed at the mounting surface (91) of said vehicle chassis (90). Also a mounting component (43) is configured, fixing said intermediate pitman arm (40) onto the mounting surface (91) of the vehicle chassis (90).

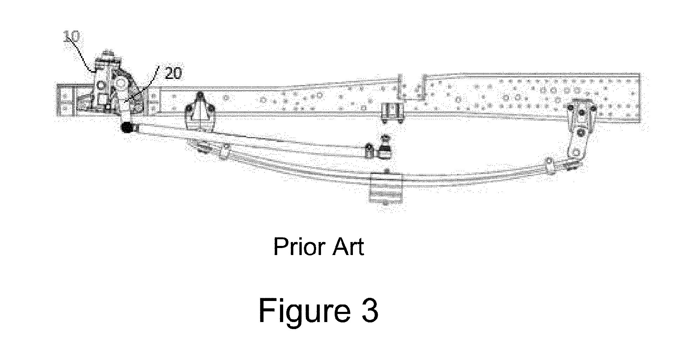

In Figure 3, the close-up mounted view of the double draglink configuration used in the prior art is shown. The pitman arm (20) connected to the steering box (10) and the draglink formed of a single piece arm connected to this pitman arm (20) according to the prior art are shown.

The way of operation of the double draglink configuration (A) according to the invention is as follows: the pitman arm (20) connected to the steering box (10) moves the first draglink (30) back and forth with its circular motion. The moving first draglink (30) transmits the motion taken from the pitman arm (20) connected to the steering box (10) to the second draglink (50) by means of the intermediate pitman arm (40). The joint where the second draglink (50) is connected to the intermediate pitman arm (40) is positioned on the ideal center (80). The second draglink (50) receiving the motion moves the link mechanism found at the front axle (70). The movement of the first draglink (30) and the second draglink (50) towards the front side and the rear side of the vehicle steers the vehicle to the left and right hand sides, respectively.

In the double draglink configuration (A) according to the invention, the mounting component (43) is fixed on the mounting surface (91) of the vehicle chassis (90). The intermediate pitman arm (40) is mounted at this region such that it would make circular motion via the bearing axis (42). Compared to the prior art, two different draglinks are used in the novel technique. That is to say, the invention comprises a first draglink (30) and a second draglink (50) comprising more than one draglink connected on the same horizontal axis (Y) via joint points (41). Besides, the invention is configured to comprise an intermediate pitman arm (40) positioned between said horizontal axis (Y) joint points (41) by means of at least one bearing axis (42) on the vertical axis (D). While the intermediate pitman arm (40) preferably comprises a single rod body having an angular surface, it is also possible that is comprises fork-shaped two rod bodies also according to preference and design situation.

## Claims

1. A double draglink configuration (A) connected to said pitman arm (20) which is connected to steering box (10), increasing stability of the vehicle during braking, acceleration, and passing over bumps, and it is **characterized in that**; it comprises:
- a first draglink (30) connected to said pitman arm (20),
- a second draglink (50) connected to said first draglink (30) by means of joint points (41), and
- an intermediate pitman arm (40) positioned between said first draglink (30) and second draglink (50), and connected such that it would make rotating motion by means of said joint points (41).

2. The double draglink configuration (A) according to Claim 1, and it is **characterized in that**; it comprises an intermediate pitman arm (40) having an angular extension (44) connected to the mounting component (43) fixed at the mounting surface (91) of the vehicle chassis (90).

3. The double draglink configuration (A) according to Claim 1, and it is **characterized in that**; it comprises a mounting component (43) fixed to said intermediate pitman arm (40) onto the mounting surface (91) of the vehicle chassis (90).

4. The double draglink configuration (A) according to Claim 1, and it is **characterized in that**; it comprises a bearing axis (42) providing swinging motion for said intermediate pitman arm (40).

5. The double draglink configuration (A) according to Claim 1, and it is **characterized in that**; it comprises a first draglink (30) and a second draglink (50) comprising a plurality of tie bars connected on the same horizontal axis (Y) via joint points (41).

6. The double draglink configuration (A) according to Claim 1, and it is **characterized in that**; it comprises an intermediate pitman arm (40) configured between said horizontal axis (Y) joint points (41) by means of at least one bearing axis (42) on the vertical axis (D).
